**Europäisches Patentamt**

**European Patent Office**

**Office européen des brevets**

(19)

(11) Numéro de publication: **0 061 943
B1**

(12) **FASCICULE DE BREVET EUROPEEN**

(45) Date de publication du fascicule du brevet:
**27.12.84**

(51) Int. Cl.³: **B 62 K 19/30**

(21) Numéro de dépôt: **82400284.4**

(22) Date de dépôt: **18.02.82**

(54) **Dispositif de fixation d'un dérailleur sur une patte de cadre.**

(30) Priorité: **23.03.81 FR 8105719**

(43) Date de publication de la demande:
**06.10.82 Bulletin 82/40**

(45) Mention de la délivrance du brevet:
**27.12.84 Bulletin 84/52**

(84) Etats contractants désignés:
**DE GB IT**

(56) Documents cités:
**CH - A - 332 033
FR - A - 1 020 378
FR - A - 2 189 657**

(73) Titulaire: **HURET ET SES FILS Société dite:, 60 Avenue Félix Faure, F-92000 Nanterre (FR)**

(72) Inventeur: **Huret, Roger, Décédé (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention concerne les dérailleurs pour cycles et plus particulièrement leur montage sur le cadre.

On sait qu'en général un dérailleur est porté par une plaque support qui est elle-même fixée sur la patte de cadre arrière de la bicyclette. Le montage de l'ensemble constitué par le dérailleur et sa plaque support s'effectue en deux temps. Tout d'abord cet ensemble est mis en place sur la patte de cadre et fixé sur cette dernière au moyen d'un dispositif à vis et écrou. Puis, lors du montage du moyeu de roue, la plaque support est fixée sur la patte de cadre en même temps que le moyeu.

Le fait de fixer dans un premier temps la plaque support sur la patte de cadre au moyen d'un dispositif à vis et écrou offre de nombreux inconvénients:

— tout d'abord il est nécessaire d'utiliser un écrou spécial qui doit comporter deux épaulements qui assurent le guidage dans la fente ou la glissière de la patte de cadre et deux ailes ou oreilles qui viennent prendre appui sur la face arrière de cette même patte de cadre. Cet écrou est donc relativement coûteux puisque sa fabrication implique une opération de décolletage;

— un autre inconvénient réside dans le fait que lors de l'assemblage du dérailleur et de sa plaque support, on doit monter sur cette dernière la vis et l'écrou qui permettront d'assurer ultérieurement la fixation sur la patte de cadre. Ceci implique par conséquent un premier serrage peu important de l'écrou et de la vis, suivi d'un desserrage pour permettre le montage sur la patte de cadre, et un nouveau serrage pour assurer la fixation. Il est à noter que cette deuxième opération de serrage est délicate puisqu'elle nécessite l'utilisation de deux clés et qu'il est nécessaire d'assurer simmultanément le positionnement correct de la plaque support par rapport à la patte de cadre. Il existe également un risque, lors de diverses manipulations du dérailleur, de voir la vis et l'écrou se desserrer et se détacher de la plaque support.

Le but de cette invention est de proposer un dispositif de montage du dérailleur et de sa plaque support sur la patte de cadre, qui ne présente pas ces divers inconvénients et qui soit plus simple, moins coûteux et dont le montage soit facilité.

Ce résultat est obtenu en prévoyant sur la plaque support un organe de coincement monté rotatif à frottement dur par rapport à cette plaque et destiné à coopérer avec la patte de cadre, la plaque support comportant de plus, de préférence, un organe élastique pouvant s'encliqueter dans la fente ou la glissière de la patte de cadre pour assurer le centrage de la plaque support.

Suivant un mode de réalisation, l'organe de coincement est constitué par un plot en saillie latérale par rapport à la plaque support, ce plot comportant une surface active cylindrique dont la base est elliptique, ovale ou analogue et dont la dimension radiale varie entre deux valeurs respectivement inférieure et supérieure à la largeur de la fente de la patte de cadre.

Suivant un deuxième mode de réalisation, l'organe de coincement comprend une rampe inclìnée qui coopère avec la face de la patte de cadre opposée à celle sur laquelle la plaque support est en appui.

L'invention va être décrite plus en détail ci-dessous en se référant au dessin annexé, donné uniquement à titre d'exemple et sur lequel:

la fig. 1 est une vue en élévation latérale d'un premier mode de réalisation d'un dispositif de montage de dérailleur suivant l'invention;

la fig. 2 est une vue en coupe suivant la ligne 2-2 de la fig. 1;

la fig. 3 est une vue en coupe analogue à celle de la fig. 2 d'une variante, et

la fig. 4 est une vue en coupe également analogue à celle de la fig. 2 d'une autre variante.

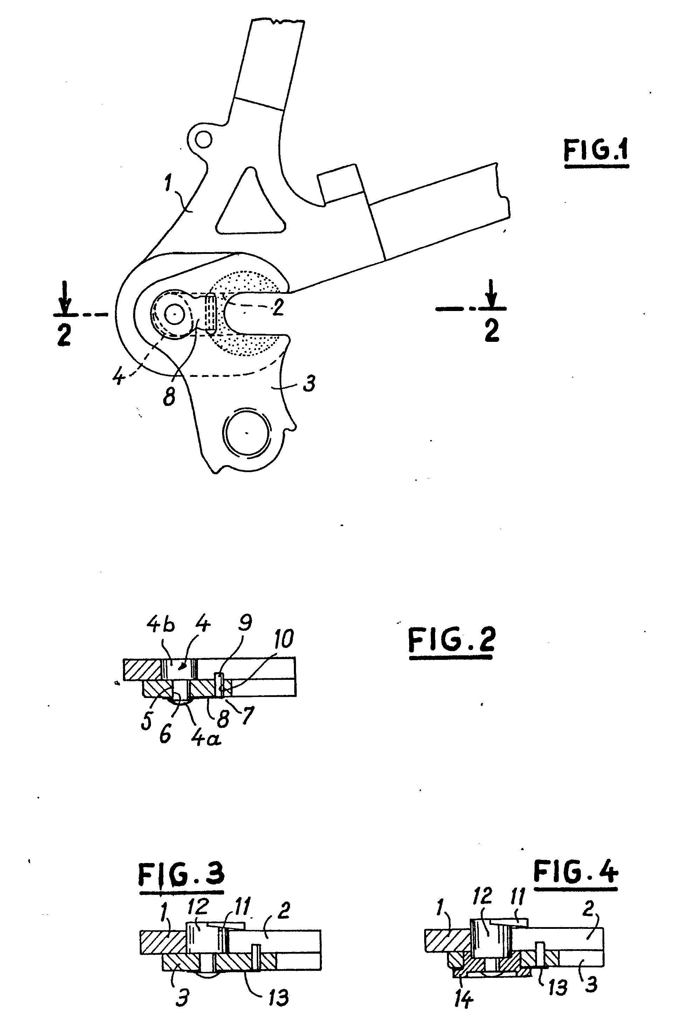

On voit sur la fig. 1 une patte de cadre 1 comprenant une fente ou glissière 2 et sur laquelle doit être montée une plaque support de dérailleur 3.

La plaque support comporte un plot de montage 4 fixé, par exemple, par rivetage en 4a et monté rotatif à frottement dur par une portée 5 reçue dans un logement 6 de la plaque support. Ce plot a une paroi latérale cylindrique 4b et sa section par un plan transversal n'est pas circulaire. Elle est de préférence elliptique, ovale ou analogue et présente une dimension radiale comprise entre deux valeurs respectivement inférieure et supérieure à la largeur de la fente de la patte de cadre.

La plaque support est également munie d'un organe de centrage 7 constitué par une lame élastique 8 maintenue en même temps que le plot 4 et qui comporte une extrémité rabattue 9 en saillie à travers une lumière 10 de la plaque support.

La mise en place et le montage sur une patte de cadre d'un dérailleur porté par une telle plaque support s'effectue de la façon suivante: on engage le plot 4 dans la fente 2 de la patte de cadre, en le présentant de telle façon qu'il s'engage facilement dans cette fente. Lorsqu'il est parvenu au fond de cette fente, il suffit de faire tourner la plaque support qui entraîne le plot, jusqu'à ce qu'un coincement se produise entre le plot et les faces opposées de la fente. Lorsque ce coincement survient, on poursuit la rotation de la plaque support jusqu'à ce que l'organe de centrage 7 s'enclenche élastiquement dans la fente précitée.

Dans le mode de réalisation des figures 3 et 4, l'organe de coincement est constitué par une rampe 11 faisant saillie latéralement par rapport à un plot 12 lui-même monté rotatif à frottement dur sur la plaque support. Cette rampe inclinée par rapport à la face adjacente de la patte de cadre est destinée à coopérer avec cette même face pour assurer le blocage de la plaque support par rapport à la patte de cadre. Dans le cas de la fig. 3, le plot portant cette rampe est simplement monté rotatif à frottement dur par rapport à la plaque support et maintenu axialement par rivetage, comme dans l'exemple précédent. Egalement comme dans l'exemple précédent, il est prévu un organe élastique de centrage 13 porté par la plaque support et qui permet de déterminler la position correcte de cette plaque par rapport à la patte de cadre.

Dans le cas de la fig. 4, il est prévu entre le plot 12 portant la rampe 11 et la plaque support une bague 14 destinée à faciliter la rotation relative entre la plaque support et le plot après coincement de ce dernier par rapport à la patte de cadre.

Le mode de fonctionnement de ces deux dispositifs de blocage et le même: on engage la plaque support dans la fente 2 de la patte de cadre, en lui donnant une position telle que la rampe 11 n'interfère pas avec la face arrière de la patte. Puis, lorsque le plot 12 est arrivé au fond de la fente de la patte, on fait tourner la plaque support de façon à amener la rampe progressivement en prise avec la face arrière de la patte. Lorsque le coincement se produit, on poursuit la rotation de la plaque support jusqu'à ce que l'organe de positionnement ou de centrage 13 s'enclenche élastiquement dans la fente 2.

Comme dans l'exemple précédent, on voit que le montage s'effectue de façon particulièrement simple, sans qu'il soit nécessaire de desserrer puis de serrer une vis et un écrou. Par ailleurs, les moyens mis en jeu sont simples et peu coûteux de sorte que les objectifs recherchés sont bien atteints.

Dans les deux cas, le dispositif permet le montage de la plaque support sur des pattes de cadre d'épaisseurs différentes comprises, par exemple, entre 35 et 50 mm.

**Revendications**

1. Dispositif de fixation d'un support (3) de dérailleur sur une patte de cadre (1) de bicyclette, caractérisé en ce que le support (3) porte un organe de coincement (4, 12) monté rotatif à frottement dur et destiné à coopérer avec la patte de cadre (1) en ce coinçant dans une fente (2) de cette dernière.

2. Dispositif suivant la revendication 1, caractérisé en ce que l'organe de coincement est constitué par un plot (4) en saillie latérale par rapport au support (3), ce plot comportant une surface active cylindrique (4b) dont la base est elliptique, ovale ou analogue et dont la dimension radiale varie entre deux valeurs respectivement inférieure et supérieure à la largeur de la fente (2) de la patte de cadre (1).

3. Dispositif suivant la revendication 1, caractérisé en ce que l'organe de coincement (12) comprend une rampe inclinée (11) qui coopère par frottement avec la face de la patte de cadre (1) opposée à celle sur laquelle le support (3) est en appui.

4. Dispositif suivant l'une quelconque des revendications 1 à 3, caractérisé en ce que le support (3) porte un organe élastique (8; 13) pouvant s'encliqueter dans la fente (2) de la patte de cadre (1) pour assurer le centrage du support par rapport à la patte de cadre.

5. Dispositif suivant la revendication 4, caractérisé en ce que l'organe élastique de centrage est une lame métallique (8; 13) fixée sur le support (3) en même temps que l'organe de coincement (4; 12) et qui comporte à son extrémité libre une partie rabattue (9) coopérant avec la fente (2).

**Claims**

1. A device for fixing a derailleur support (3) on a bicycle frame lug (1), characterized in that the support (3) carries wedging means (4, 12) which are rotatively mounted with a high degree of friction and are adapted to cooperate with the frame lug (1) by wedging in a slot (2) of the latter.

2. A device according to claim 1, characterized in that the wedging means are formed by a stud (4) which laterally projects from the support (3), this stud including a cylindrical active surface (4b) having an elliptical, oval or similarly shaped base the radial dimension of which varies between two values which are respectively less than and greater than the width of the slot (2) of the frame lug (1).

3. A device according to claim 1, characterized in that the wedging means (12) comprise an inclined surface (11) which frictionally cooperates with the side of the fame lug (1) opposed to the side against which the support (3) bears.

4. A device according to any one of the claims 1 to 3, characterized in that the support (3) carries an elastically yieldable means (8; 13) which is capable of clipping into the slot (2) of the frame lug (1) so as to centre the support with respect to the frame lug.

5. A device according to claim 4, characterized in that the elastically yieldable centring means is a metal strip (8; 13) which is fixed on the support (3) at the same time as the wedging means (4; 12) and has at its free end a formed-over part (9) which cooperates with the slot (2).

**Patentansprüche**

1. Einrichtung zum Befestigen der Tragplatte (3) für einen Gangverstellhebel an dem Rahmenfuss (1) eines Fahrrades, dadurch gekennzeichnet, dass die Tragplatte (3) ein Klemmelement (4, 12) trägt, welches mit starker Reibung drehbar daran befestigt ist und welches mit dem Rahmenfuss (1) zusammenwirkt, indem es sich in einem Aufnahmeschlitz (2) desselben verklemmt.

2. Einrichtung nach Anspruch 1, dadurch gekennzeichnet, dass das Klemmelement durch einen seitlich von der Tragplatte (3) abstehenden Zapfen (4) gebildet wird, wobei der Zapfen eine zylindrische Klemmfläche (4b) mit elliptischem, ovalem oder einem gleichartigen Grundriss aufweist, und wobei die radialen Abmessungen des Zapfens sich zwischen zwei Werten ändern, welche kleiner bzw. grösser als die Breite des Aufnahmeschlitzes (2) des Rahmenfusses (1) ist.

3. Einrichtung nach Anspruch 1, dadurch gekennzeichnet, dass das Klemmelement (12) einen abgeschrägten Rampenfortsatz (11) aufweist, welcher reibschlüssig hinter die Fläche des Rahmenfusses (1) greift, die von der Fläche, gegen die sich die Tragplatte (3) anlegt, abgewandt ist.

4. Einrichtung nach einem der Ansprüche 1 bis 3, dadurch gekennzeichnet, dass die Tragplatte (3) ein elastisches Teil (8, 13) trägt, welches in den Aufnahmeschlitz (2) des Rahmenfusses (1) einrastbar ist, um eine Zentrierung der Tragplatte bezüglich des Rahmenfusses zu gewährleisten.

5. Einrichtung nach Anspruch 4, dadurch gekennzeichnet, dass das elastische Teil zum Zentrieren der Tragplatte ein Metall-Federblatt (8, 13) ist, welches an der Tragplatte (3) zusammen mit dem Klemmorgan (4, 12) befestigt ist und welches an seinem freien Ende einen abgebogenen Teil (9) aufweist, welcher in den Aufnahmeschlitz (2) eingreift.

FIG.1

FIG.2

FIG.3

FIG.4